# FASCICULE DE BREVET EUROPEEN

(11) **EP 0 489 673 B1**
(45) Date de publication et mention de la délivrance du brevet: **05.06.1996**
(21) Numéro de dépôt: 91440105.4
(22) Date de dépôt: 06.12.1991
(51) Int. Cl.: E04B 1/343, E04B 1/344, B65D 90/14, E04G 21/16, B60P 1/64

(54) **Abri-conteneur habitable à volume intérieur extensible**
Wohncontainer mit streckbarem Innenraum
Habitable container with extensible interior volume

(30) Priorité: 06.12.1990 FR 9015456
(43) Date de publication de la demande: 10.06.1992
(73) Titulaire: LOHR INDUSTRIE, F-67980 Hangenbieten (FR)
(72) Inventeur: Ros, Eric, F-67200 Strasbourg (FR)
(74) Mandataire: Metz, Paul

(56) Documents cités:
- EP-A- 0 329 261
- GB-A- 1 021 625
- US-A- 4 010 990
- US-A- 4 275 533

## Description

La présente invention se rapporte à un abri-conteneur transportable à volume intérieur habitable extensible et à agencement multiple.

On connaît déjà divers types de conteneurs utilisés en tant qu'abris habitables.

Ces conteneurs présentent l'avantage d'être déplaçables car transportables par les moyens conventionnels tels que les véhicules de transport par voie routière ou ferroviaire.

Ces abris présentent un appui au sol sous la forme d'une structure inférieure en châssis ou par des béquilles fixes rapportées ou amovibles.

Par ailleurs, les véhicules de transport logistique comportent un bras de chargement utilisé pour la préhension, le levage et la mise en place d'une plate-forme ou d'un conteneur sur leur châssis porteur.

La présente invention a pour but de proposer un abri-conteneur habitable, extensible et modulable, de grande facilité d'usage, qui peut être manipulé en vue de son chargement et de son transport de trois façons différentes :
. par béquilles, à la manière d'une caisse mobile ;
. par les moyens classiques équipant les véhicules de transport logistique ;
. par avion-cargo à l'aide des techniques mises en oeuvre pour le matériel aérotransportable.

A cette fin, l'invention a pour objet un abri-conteneur tel que défini par la revendication 1 dans laquelle les caractéristiques mentionnées en préambule sont connues du document EP-A-0 329 261.

De nombreux avantages découlent de l'existence et de l'utilisation de l'abri-conteneur selon la présente invention tels que ceux cités de façon non exhaustive ci-après :
. présence de béquilles escamotables de soutien et de levage déportées latéralement en position de travail et permettant le passage sous l'abri relevé d'un véhicule routier porteur en vue de son chargement sur son châssis ;
. structure inférieure mixte permettant à l'abri d'être transporté par les divers moyens existant sans nécessiter une quelconque transformation ou modification et ceci notamment par des véhicules de transport logistique ou par les avions-cargos ;
. surface habitable extensible sur chacune de ses grandes faces latérales ;
. structures adaptées de préhension par un véhicule de transport logistique.

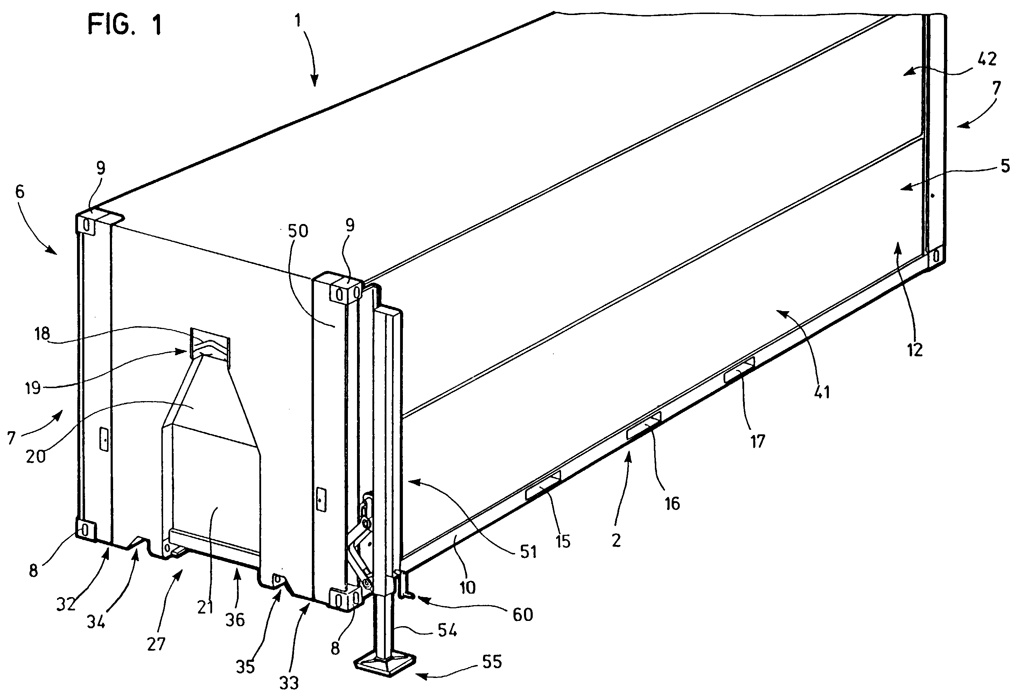

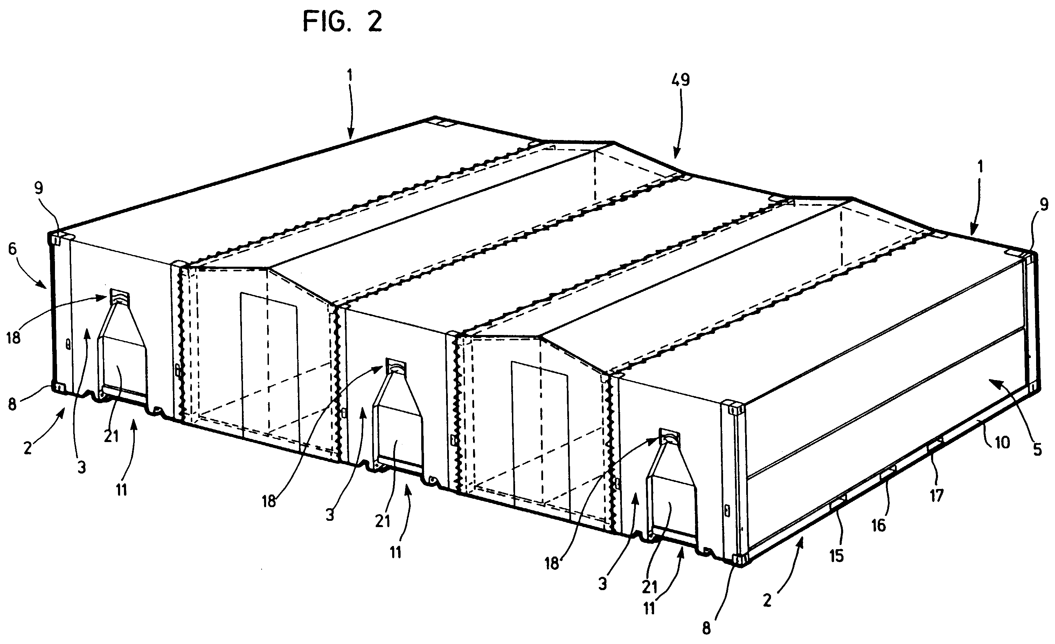

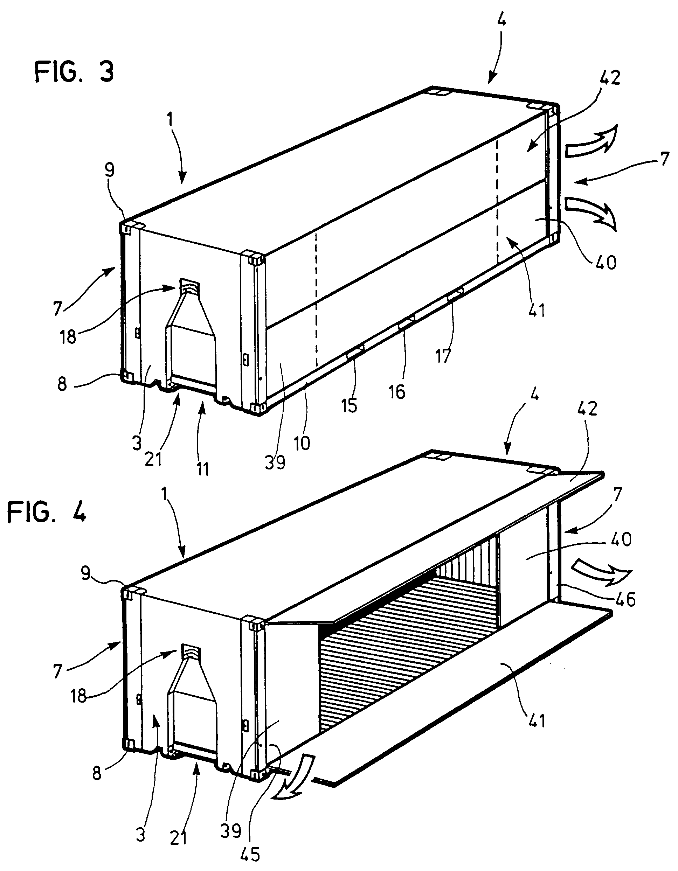

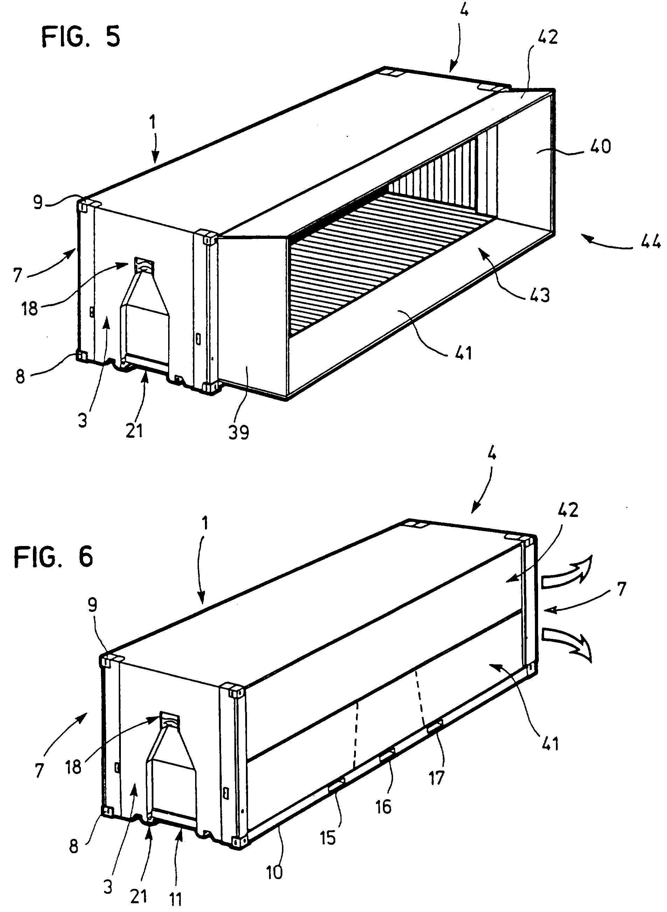

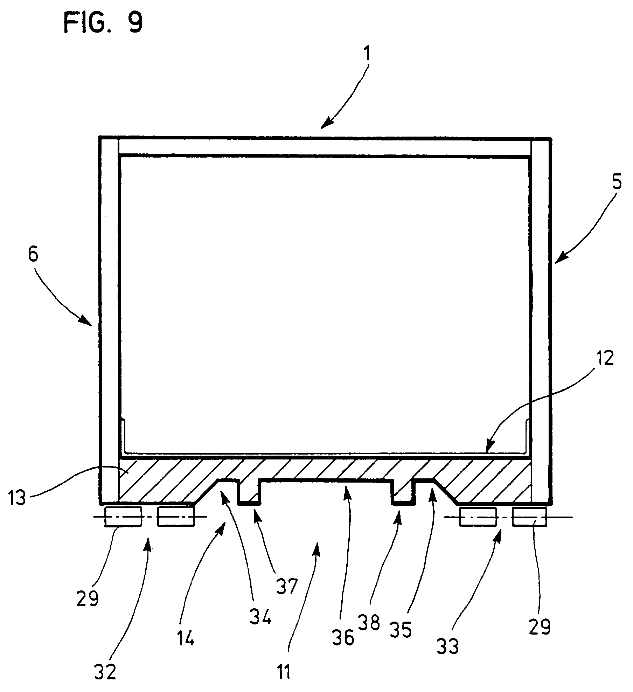

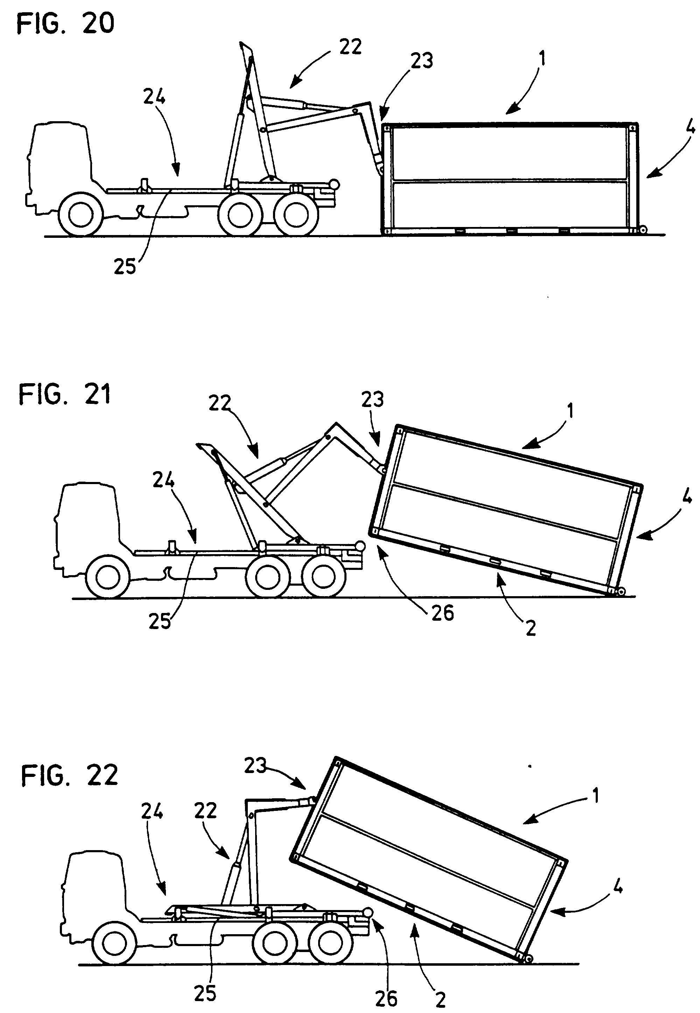

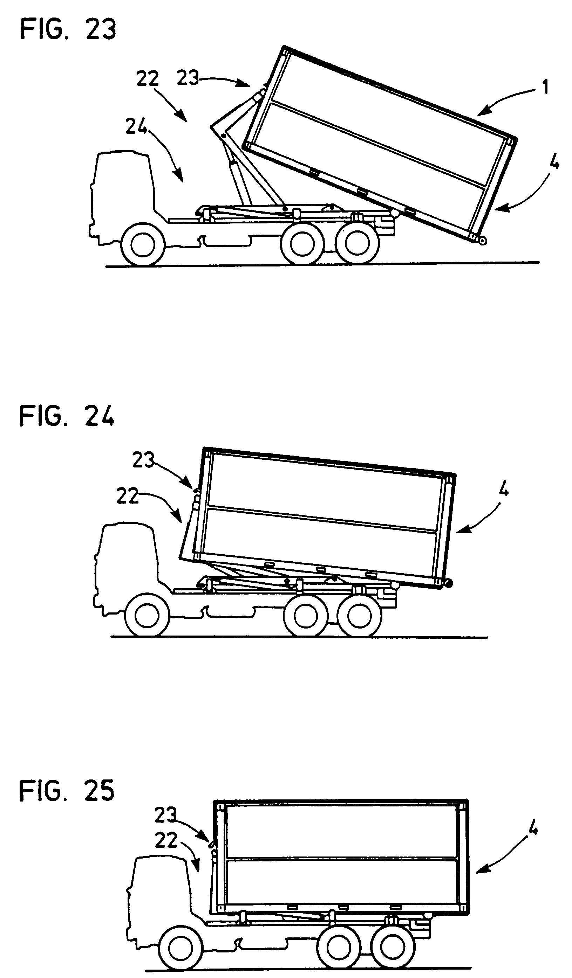

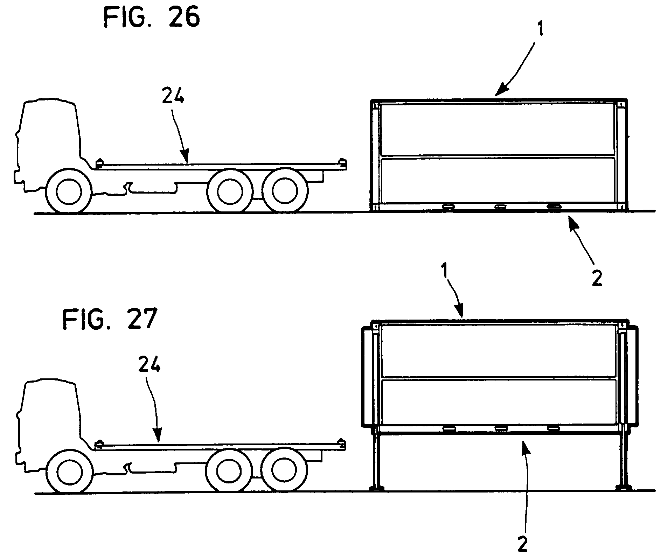

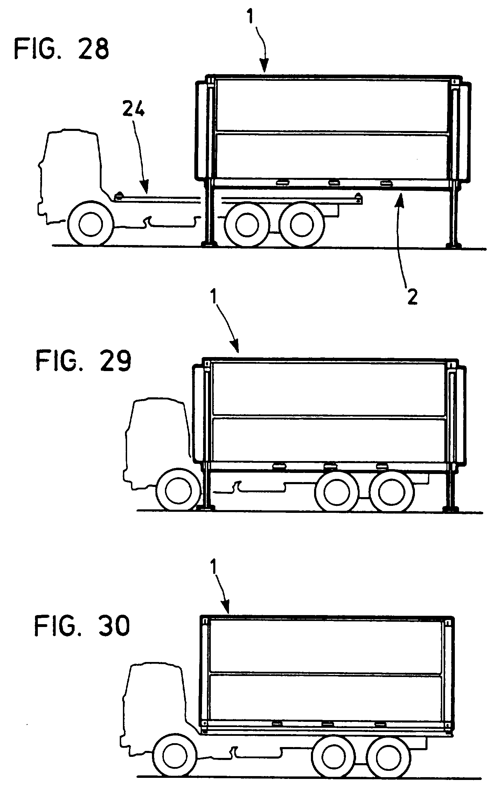

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue en perspective de l'abri selon l'invention sur lequel on a représenté une béquille sortie en appui au sol ;
. la figure 2 est une vue d'ensemble en perspective montrant l'association de plusieurs abris-conteneurs par la jonction de leurs auvents selon un groupement parallèle ;
. les figures 3 à 5 sont des vues successives en perspective simplifiée illustrant la séquence d'ouverture d'un auvent selon une première variante ;
. les figures 6 à 8 sont des vues successives en perspective simplifiée illustrant la séquence d'ouverture d'un auvent selon une deuxième variante ;
. la figure 9 est une vue en coupe transversale de la structure support inférieure ;
. les figures de 10 à 13 sont des vues schématiques illustratives d'une séquence de mise en oeuvre d'un premier type de béquille de levage et de soutien :
   - figure 10 montant fermé
   - figure 11 montant ouvert
   - figure 12 béquille sortie
   - figure 13 béquille en contact avec le sol ;
. les figures de 14 à 17 sont des vues schématiques illustratives d'une séquence de mise en oeuvre d'un deuxième type de béquille de levage et de soutien :
   - figure 14 montant fermé
   - figure 15 montant ouvert
   - figure 16 béquille sortie
   - figure 17 béquille en contact avec le sol ;
. la figure 18 est une vue de profil d'un abri-conteneur soutenu par ses béquilles au-dessus du châssis d'un véhicule porteur ;
. la figure 19 est une vue en élévation arrière de l'abri-conteneur sur un véhicule porteur représenté sur la figure 18 illustrant le déport latéral de levage et de soutien apporté par les béquilles escamotables ;
. les figures 20 à 25 sont des vues schématiques montrant une phase de chargement par le bras d'un véhicule de transport logistique ;
. les figures 26 à 30 sont des vues schématiques illustratives d'une phase de chargement dans laquelle les béquilles sont utilisées comme moyen de levage ;
. la figure 31 est une vue en perspective montrant l'abri-conteneur sur un chemin de roulement à rouleaux du type de ceux utilisés comme moyens de chargement pour les conteneurs aérotransportables ;
. la figure 32 est une vue agrandie en perspective d'une piste du chemin à rouleaux.
. la figure 33 est une vue en perspective de l'arrière montrant l'abri-conteneur chargé dans un avion-cargo ;
. les figures 34 et 35 sont des vues respectivement de profil à l'état monté et en coupe à l'état dissocié d'un des rouleaux support d'aide au chargement et au déchargement ;
. la figure 36 est une vue schématique de l'arrière de l'abri-conteneur montrant l'implantation des rouleaux support.

L'abri modulaire selon l'invention se présente, en position fermée de transfert, sous la forme générale d'un conteneur du type de ceux utilisés dans les transports routiers ou maritimes, présentant deux plans horizontaux, l'un supérieur 1 de toiture et l'autre inférieur 2 de plancher, entourés par une surface latérale formée de deux faces transversales 3 et 4 et de deux façades 5 et 6 respectivement avant et arrière.

Les petites faces transversales et façades de surface latérale sont séparées par des montants d'angle tels que 7 équipés à leurs extrémités haute et basse de pièces rapportées d'accouplement inférieure 8 et supérieure 9, appelées à coopérer avec des verrous d'immobilisation (non représentés). Ces pièces d'accouplement 8 et 9 sont normalisées et connues sous la dénomination "coins ISO".

Les montants d'angle 7 sont réunis à leurs extrémités par des longerons tels que 10 formant une ossature en cadres latéraux et supérieurs, montée sur une structure inférieure de châssis appelée ci-après base-châssis 11. Celle-ci est formée d'un plateau de plancher 12, d'un châssis 13 et d'une structure inférieure technique 14 entourée par un cadre de rigidification.

Les longerons du cadre de rigidification comportent des évidements tels que 15, 16 et 17 de passage de fourches pour un chariot élévateur.

En vue de sa manutention et de son transport, l'abri-conteneur est équipé simultanément de structures et éléments de préhension tels qu'un anneau de préhension 18 dans un logement 19 à l'extrémité d'une cavité convergente de guidage 20 au-delà d'un espace technique de retrait 21, éléments tels que grue 22 et son bras-crochet 23, châssis porteur 24 à rails de guidage 25 et rouleaux d'extrémité 26 constituant les moyens de préhension, de chargement et de déchargement que possèdent les véhicules de transport logistique dits VTL, moyens prévus indifféremment à l'avant ou à l'arrière du conteneur sur l'une ou l'autre de ses petites faces latérales.

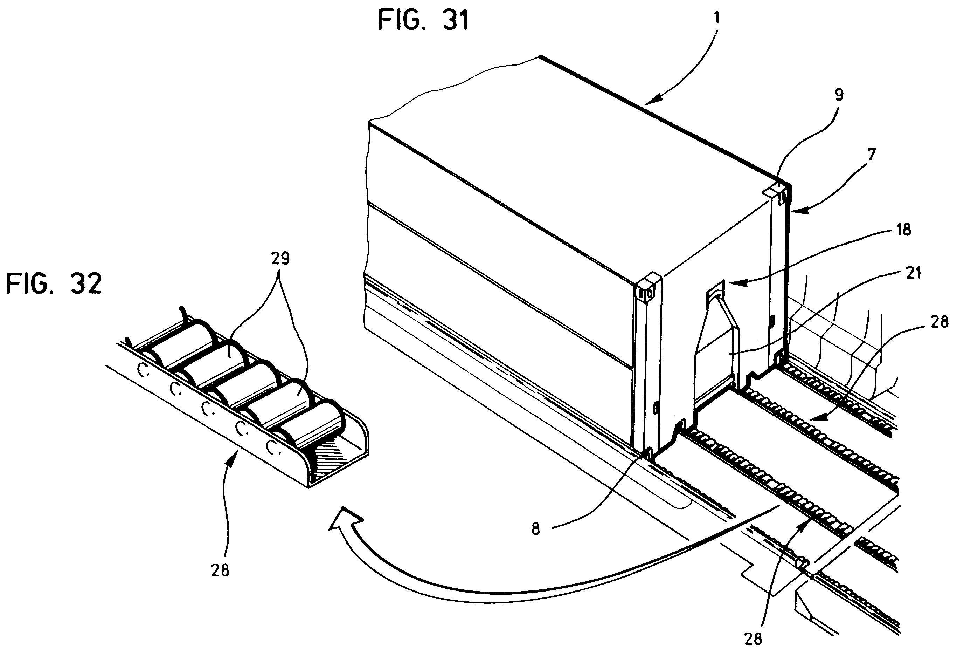

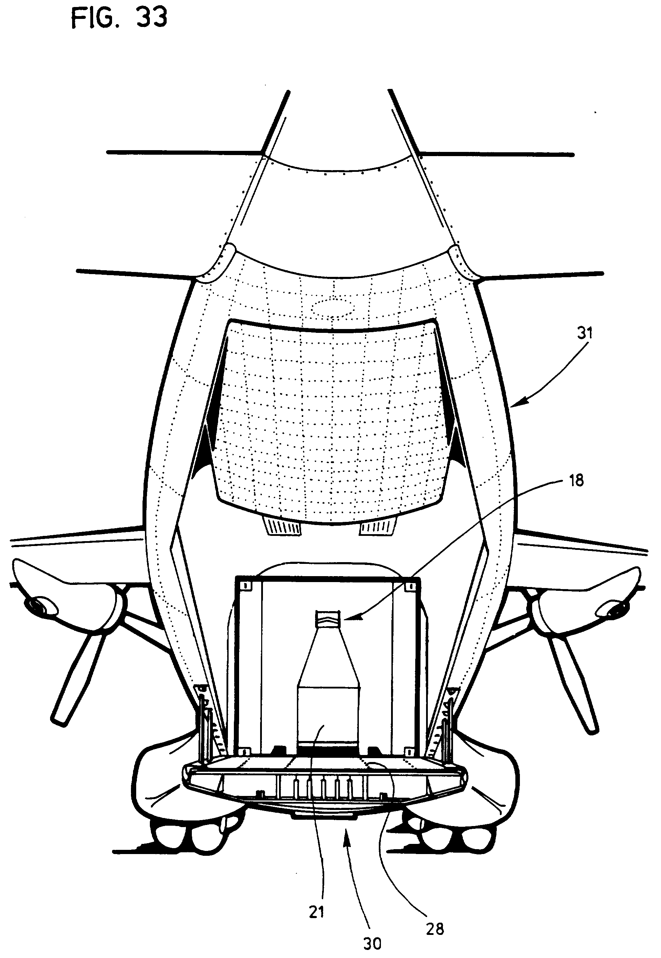

L'abri-conteneur comprend également en sous-face de sa structure inférieure de châssis 11 des moyens adaptés de guidage-roulage 27 pour permettre son chargement et son transport indifféremment sur les véhicules dits VTL et sur les pistes 28 à rouleaux porteurs tels que 29 des plans de chargement 30 dans les avions-cargos 31 (figures 31 à 33). Ces moyens seront décrits en détail ci-après.

La sous-face technique de la structure inférieure de la base-châssis 11 est conformée, des bords longitudinaux vers une zone longitudinale médiane, selon deux plages planes 32 et 33 longitudinales rectilignes suivies de part et d'autre de cette zone de deux évidements longitudinaux 34 et 35 coopérant avec les rails de guidage 25 des structures porteuses des véhicules dits VTL. La partie centrale consiste en un espace technique en retrait 36 de largeur et de profondeur suffisantes pour permettre le passage de la base-châssis 11 le long de la structure porteuse du véhicule de transport logistique malgré la présence d'éléments ou d'organes en saillie dans cette zone médiane du châssis porteur.

Cette partie centrale est bordée de chaque côté d'un plan longitudinal porteur 37 et 38 apte à venir en contact avec les rouleaux 29 du train de rouleaux d'une piste de convoyage 28 telle que celle équipant les plans de chargement des avions-cargos 31.

Avantageusement, le volume de l'abri est réalisé extensible en position d'utilisation, grâce à ses panneaux de façade latéraux 39 et 40 et horizontaux de plancher 41 et de toiture 42, articulés respectivement autour des montants d'angle 7 et des longerons 10 en vue de former des surfaces de plancher et de plafond supplémentaires constituant à l'état montés une extension habitable 43 sous la forme d'un auvent 44 le long de l'une, de l'autre, ou de ses deux grandes surfaces latérales.

Ces extensions sont recouvertes chacune d'une ou de plusieurs bâches imperméables destinées à parfaire l'étanchéité. Elles sont fixées par exemple par des crochets et sandows sur les structures voisines. Chacune des bâches est équipée par exemple de deux portes et de deux fenêtres.

Les panneaux composites ouvrants de façade tels que représentés sur les figures de 3 à 8 sont par exemple de deux sortes.

La façade se compose selon une première variante (figures 3 à 5) de panneaux longitudinaux d'extension de plancher 41 et de toiture 42 pivotant sur les longerons et de panneaux latéraux 39 et 40 du type volets, articulés chacun aux montants 7 selon une ligne charnière 45 et 46. L'ensemble s'ouvre à la manière d'une boîte ou d'une caisse en carton et les panneaux s'immobilisent et sont fixés les uns aux autres ou les uns sur les autres de façon connue pour constituer un auvent.

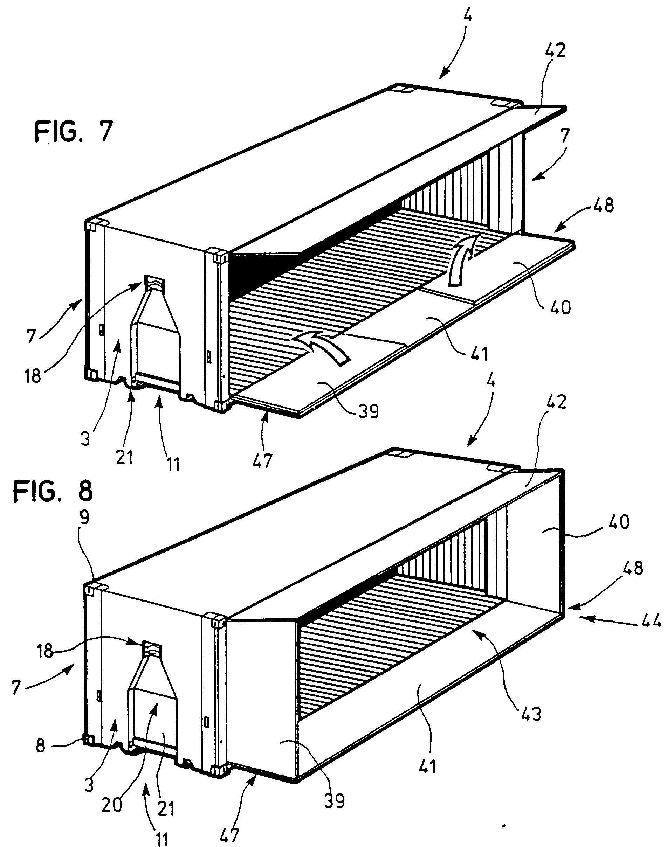

La façade se compose selon une deuxième variante (figures 6 à 8) également de panneaux longitudinaux d'extension de plancher 41 et de toiture 42 montés pivotants sur les longerons 10. Les deux panneaux latéraux 39 et 40 sont rabattables car articulés sur les côtés latéraux du panneau longitudinal d'extension de plancher, chacun par une ligne charnière 47 et 48, pour venir se mettre en place par dépliage-relevage tel que représenté sur la figure 7.

Les abris-conteneurs peuvent être assemblés entre eux par des moyens classiques de manière à constituer des ensembles habitables 49 plus étendus, comme le montre la figure 2.

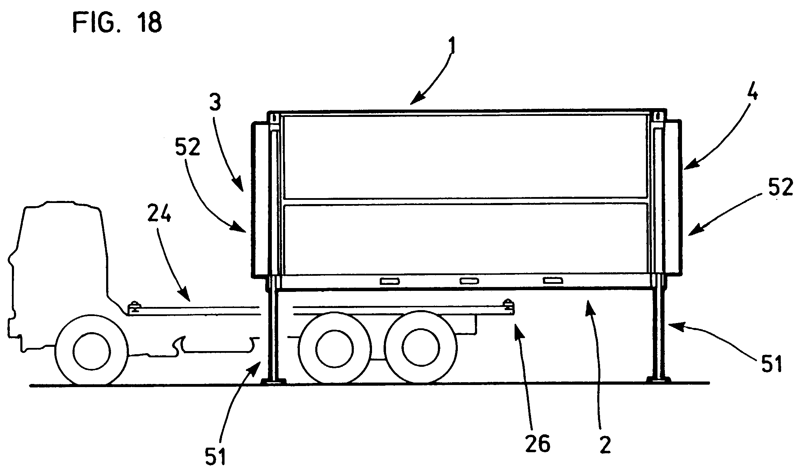

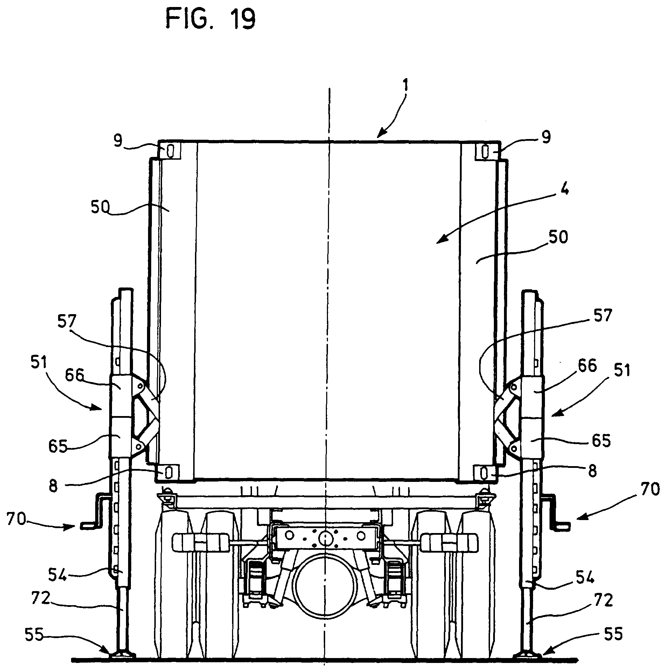

L'une des particularités de l'abri-conteneur concerne les montants d'angle 7 réalisés sous la forme d'un caisson 50 abritant des béquilles de soutien et de levage telles que 51, susceptibles de constituer un appui déporté latéralement pour permettre le levage de l'abri tout en gardant une largeur inter-appuis suffisante pour le passage d'un véhicule porteur en vue de son chargement par le seul usage des béquilles (figures 18 et 19).

On décrira maintenant plus précisément les béquilles de soutien et de levage en référence aux figures de 10 à 17.

Avantageusement, comme indiqué, les béquilles 51 sont logées dans les caissons 50 lorsque non utilisées. Le caisson de chacun des montants est obturé par une porte pivotante verrouillable 52.

Elles présentent un corps tubulaire 53 recevant, de façon télescopique, une tige motrice de support 54 s'appuyant sur une semelle d'appui ou patin 55.

Les béquilles 51 sont maintenues verticales et sortent du montant selon un parfait mouvement de translation grâce à un ensemble d'extension 56 à liaison double articulée, en croisillon 57 articulé à pivotement en son centre, dont les extrémités inférieures des éléments croisés sont montées pivotantes par deux articulations référencées 58 et 59 respectivement sur une paroi du montant et sur la base du corps tubulaire de la béquille, et dont les extrémités supérieures peuvent se déplacer longitudinalement dans au moins une articulation à lumière.

On distingue deux types de béquilles portées par l'ensemble d'extension 56.

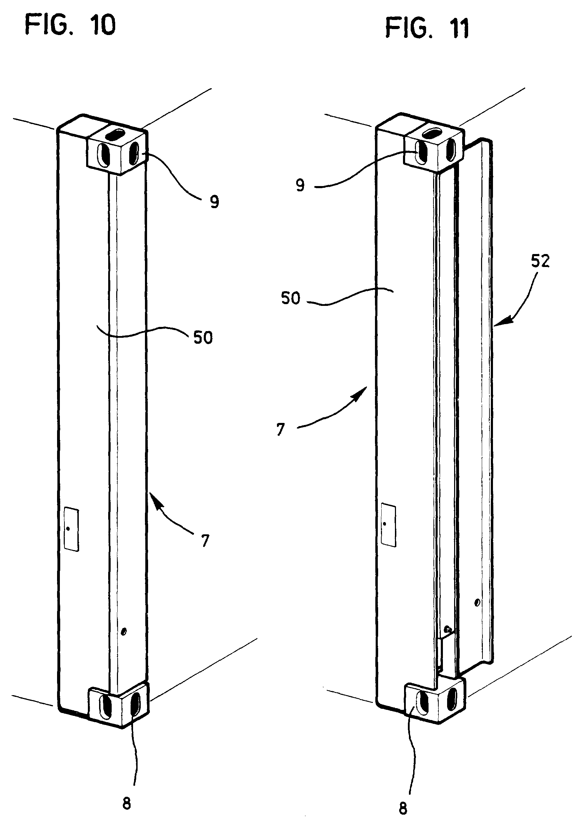

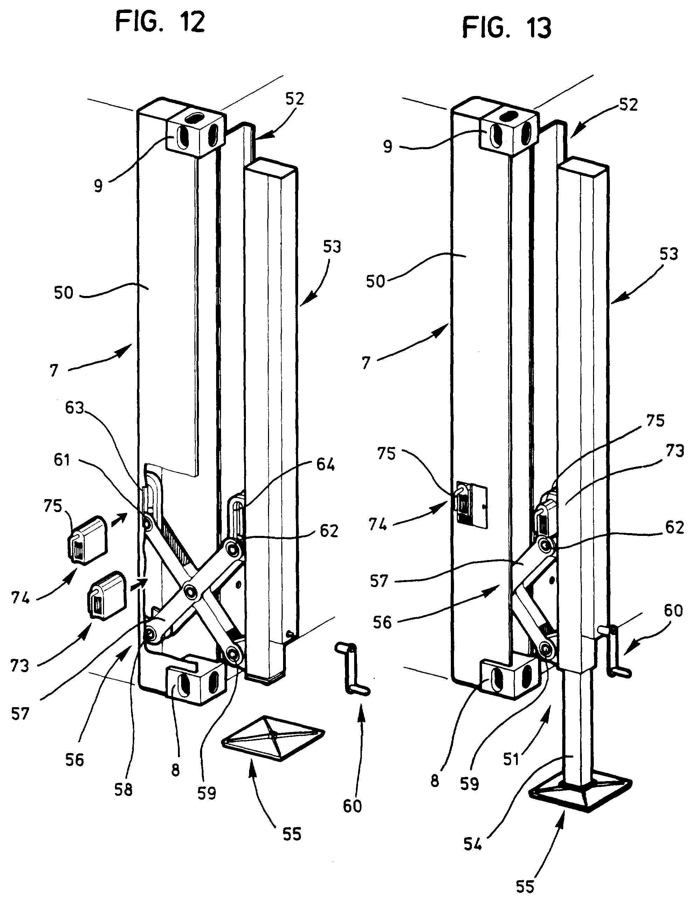

Tout d'abord, les béquilles à corps tubulaire longitudinal, dans lequel coulisse la tige de support 54 d'un vérin à vis commandé par une manivelle 60. Le corps tubulaire 53 est d'une seule pièce, nécessitant pour la liaison articulée deux articulations supérieures 61 et 62 mobiles dans des lumières 63 et 64 (figures 10 à 13).

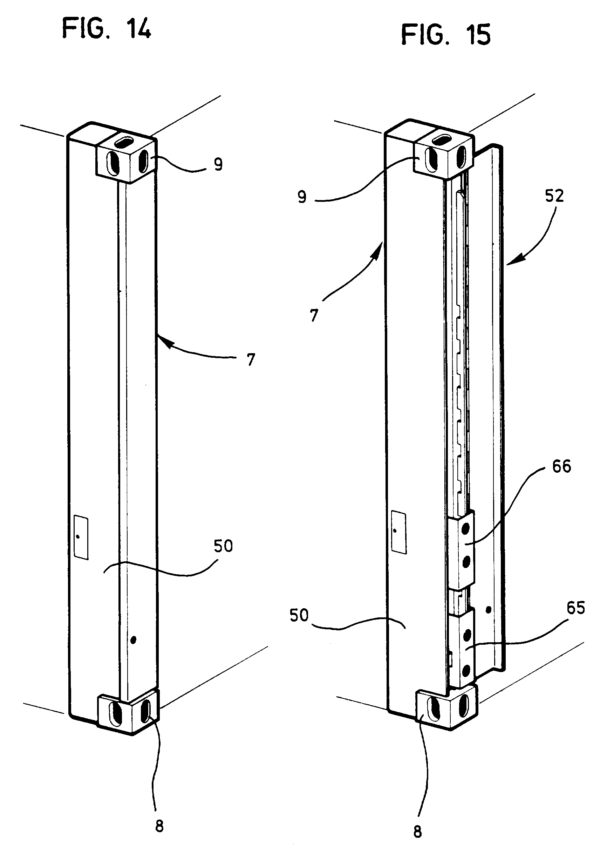

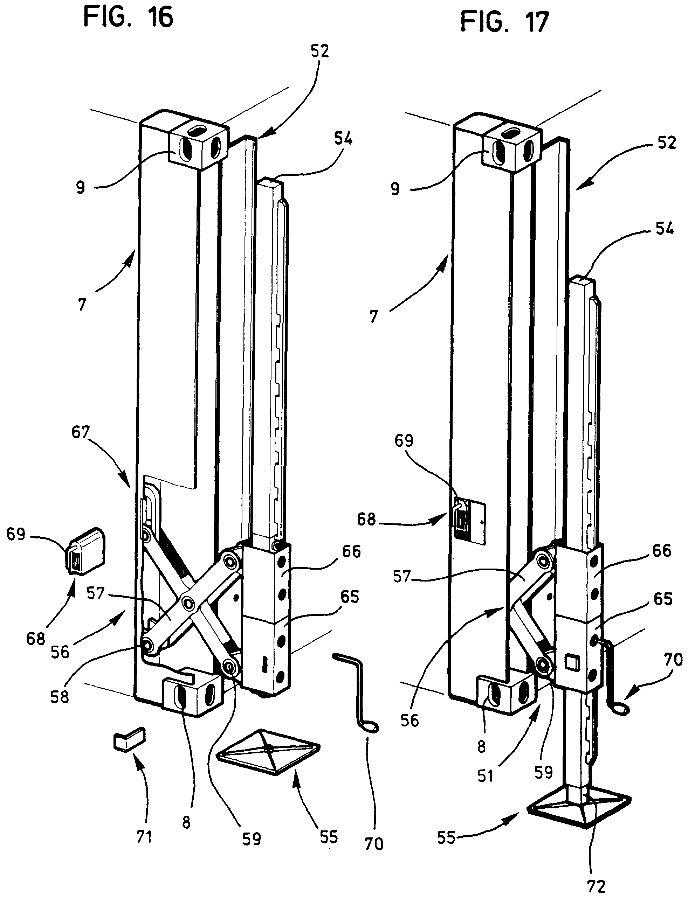

Il existe ensuite des béquilles à corps tubulaire 53 formé de deux tronçons tubulaires 65 et 66 indépendants (figures 14 à 17).

Pour ces béquilles, seule l'articulation supérieure se déplace dans une pièce à lumière 67 solidarisée au montant. La partie découverte de la lumière 67 en position sortie de la béquille est obturée par une pièce de blocage 68 immobilisée par une goupille 69 destinée à bloquer l'extension dans la position d'extension.

Ces béquilles sont actionnées en montée par une manivelle 70, par exemple du type vérin à vis à engrenage en prise sur une crémaillère, et immobilisées dans une position verticale donnée par un taquet ou une broche 71 ou tout autre élément de blocage inséré dans les évidements d'une colonne 72 coulissant dans la tige motrice de support 54.

En position rentrée, les axes d'articulation de la liaison articulée de l'ensemble d'extension 56 de la béquille à corps tubulaire d'une seule pièce occupent une position haute dans les lumières 63 et 64, et en position sortie, ceux-ci occupent une position basse, laissant dans chaque lumière une ouverture libre. Dans chacune de ces ouvertures est insérée, en vue du blocage en position d'extension, une cale amovible de blocage telle que 73 et 74 immobilisée dans ladite ouverture par une goupille de sécurité 75.

Bien entendu, il est possible de prévoir des béquilles hydrauliques, c'est-à-dire des béquilles à vérins extensibles par la pression d'un fluide.

Comme déjà indiqué, ces béquilles déportées latéralement ont pour but d'augmenter la distance entre les points d'appui en vue de permettre le passage sous l'abri du châssis d'un véhicule porteur.

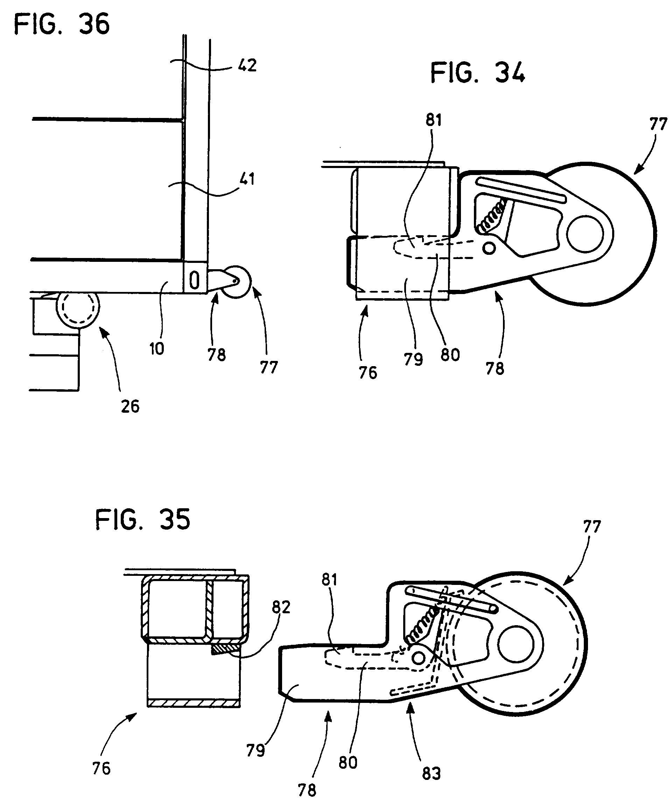

En vue de faciliter le chargement par l'organe de levage-basculement du véhicule VTL, l'abri-conteneur selon l'invention présente, par exemple sur la traverse inférieure annexe du cadre de la base-châssis 11, un ou plusieurs logements tels que 76 pour le maintien de rouleaux amovibles d'appui au sol 77 (figures 34 à 36).

Le nombre de ces rouleaux n'est pas limitatif. Il peut s'agir d'un seul grand rouleau médian, ou de deux ou trois rouleaux disposés de façon uniforme sur la largeur de l'abri-conteneur.

Ces rouleaux 77 sont montés à rotation sur des supports enfichables 78 comprenant une embase 79 venant s'emmancher dans les logements 76 et s'y verrouiller. L'immobilisation résulte de la retenue d'une patte pivotante de verrouillage 80 à extrémité en crochet 81 venant s'accrocher sur une saillie d'arrêt 82 que présente chacun des logements 76.

La patte pivotante de verrouillage 80 est montée en rappel élastique vers sa position haute d'accrochage et peut basculer vers le bas en position de libération par l'action sur un levier de dégagement 83.

Après utilisation, le ou les rouleaux amovibles sont retirés et rangés, par exemple dans un coffre.

Les particularités de construction sont détaillées ci-après.

Le plateau-plancher est constitué de bordures de rives de profil en C reliées aux extrémités par des traverses pliées, d'un solivage réalisé par des traverses, d'un panneau de type sandwich avec un parement intérieur, une mousse polyuréthane d'isolation, et un parement extérieur.

L'ossature avant est constituée d'un cadre repris par les quatre coins ISO de la structure inférieure, de deux montants avant centraux et verticaux prolongeant les moyens de guidage de la base-châssis, et d'une traverse horizontale à laquelle est intégré le dispositif de levage-basculement, notamment un guide et un anneau de préhension pour le chargement et le déchargement sur le véhicule VTL.

La paroi avant est par exemple du type sandwich comme le panneau de plancher et comporte de préférence mais non limitativement des renforts en tube d'aluminium.

La façade arrière de l'abri-conteneur présente une constitution quasiment identique à celle de la façade avant avec une ossature arrière, deux montants arrière centraux et verticaux, prolongeant les longerons de guidage, une paroi arrière du type sandwich, et de préférence un seul coffre intégré à double porte ouvrant sur l'extérieur et occupant toute la surface de la paroi arrière.

Les faces latérales sont avantageusement ouvrantes et se composent d'une ridelle rabattable vers le bas autour d'un axe horizontal inférieur et d'une rehausse de ridelle relevable autour d'un axe horizontal supérieur.

La structure de la ridelle est composée de traverses en tube d'aluminium recouvertes d'une tôle destinée à constituer l'extension du plancher en position d'utilisation de l'abri, d'une autre tôle aluminium sur le côté extérieur de l'abri, et d'un isolant en mousse de polyuréthane inséré entre les deux tôles.

En position d'utilisation, la ridelle repose sur des traverses coulissantes ou articulées sur les rives du plateau-plancher et verrouillables en position rentrée et sortie.

La rehausse de ridelle, réalisée en panneau du type sandwich, est relevable manuellement en position haute et maintenue par trois poteaux amovibles en aluminium. La charnière de rehausse formant l'axe horizontal supérieur est par construction étanche au ruissellement des eaux et on prévoit au moins un dispositif de verrouillage de la ridelle avec la rehausse de ridelle et le conteneur sur le côté extérieur de celui-ci.

Le plan de toiture de l'abri est repris sur le cadre supérieur du conteneur et il est formé d'un cadre en tube carré ou rectangulaire relié par les quatre coins ISO, et d'un panneau de toiture de type sandwich.

On peut prévoir un certain nombre d'équipements complémentaires comme quatre escaliers d'accès pour conduire aux portes de l'extension, et une échelle, placés dans les caissons pendant le transport.

L'aménagement intérieur de l'abri, les branchements électriques, la plomberie sont prévus en fonction de son usage et de sa destination et les matériaux sont choisis pour respecter les normes de construction, de résistance au feu et de sécurité en vigueur. Tous les matériaux sont en outre traités pour résister à la corrosion et au brouillard salin.

## Revendications

1. Abri-conteneur habitable à volume intérieur extensible et présentant des façades longitudinales (5, 6) et transversales (3, 4), formé de panneaux habillant une ossature constituée de quatre montants d'angle (7) réunis en extrémité par des éléments horizontaux (10) définissant un volume intérieur et des dimensions d'ouverture des façades longitudinales comprenant des moyens permettant l'agrandissement du volume intérieur par déploiement de panneaux de façade extensibles (39-42) et des béquilles (51) de soutien et de levage effaçables, caractérisé en ce que lesdites béquilles (51) sont logées dans les montants d'angle (7) et peuvent sortir de ceux-ci par un simple mouvement de translation transversale pour permettre le levage de l'abri tout en gardant une largeur inter-appuis suffisante pour le passage d'un véhicule porteur (24) en vue de son chargement par le seul usage desdites béquilles (51) et en ce que sa partie inférieure est une base-châssis (11) dont la sous-face est conformée selon des structures d'appui et de guidage destinées à coopérer avec un plan ou un chemin porteur d'un véhicule (24) et d'un aéronef transporteur (31), et en ce que le conteneur comprend sur une de ses faces transversales (3, 4) des moyens de préhension (18), contenus dans un logement (19) dans la paroi de l'une ou l'autre de ses faces transversales (3, 4), sur lesquels viennent en prise les moyens de manutention (22, 23) des véhicules dits de transport logistique (24).

2. Abri-conteneur selon la revendication 1, caractérisé en ce que les moyens de préhension (18) sont réalisés sous la forme d'un anneau de préhension.

3. Abri-conteneur selon la revendication 1, caractérisé en ce que lesdites béquilles (51) sont déportées latéralement hors des montants d'angle (7) du conteneur par un ensemble articulé (56) formé de croisillons (57) réunis entre eux à pivotement.

4. Abri-conteneur selon les revendications 1 et 3, caractérisé en ce que les montants d'angle (7) du conteneur sont réalisés sous la forme de caissons (50) dans lesquels sont logées les béquilles (51) de soutien et de levage.

5. Abri-conteneur selon l'une des revendications précédentes, caractérisé en ce que lesdites béquilles (51) sont du type à corps tubulaire monobloc (53) renfermant une tige de support (54) d'un vérin à vis prenant appui sur le sol par une semelle (55), l'ensemble étant relié au montant d'angle (7) par la liaison articulée à croisillons (56, 57) présentant deux articulations supérieures mobiles (61, 62) dans des lumières (63, 64).

6. Abri-conteneur selon l'une des revendications de 1 à 5, caractérisé en ce que lesdites béquilles (51) sont formées de deux tronçons tubulaires indépendants (65, 66) coulissant le long d'un support vertical unique ou tige de support (54) et relié au montant par une liaison articulée à croisillon pivotant (56, 57), dont l'une des articulations supérieures est mobile dans une lumière (67).

7. Abri-conteneur selon la revendication précédente, caractérisé en ce que l'immobilisation résulte d'une pièce de calage (68) insérée dans la lumières (67).

8. Abri-conteneur selon la revendication 1, caractérisé en ce que les façades longitudinales (5, 6) sont extensibles par déploiement et formées par des panneaux longitudinaux (41, 42) et latéraux (39, 40), les panneaux longitudinaux (41, 42) articulés à pivotement (39-42) directement autour du corps des longerons (10) de l'ossature, destinés à former après déploiement un auvent.

9. Abri-conteneur selon la revendication précédente, caractérisé en ce que les panneaux latéraux (39, 40) sont articulés directement autour du corps des montants d'angle (7) ou sont repliés et articulés sur les panneaux de façade longitudinaux (41, 42).

10. Abri-conteneur selon la revendication 1, caractérisé en ce que la sous-face de la structure inférieure de la base-châssis (11) est conformée selon :
. des bords longitudinaux vers une zone longitudinale médiane ;
. deux plages planes longitudinales rectilignes (32, 33) suivies de part et d'autre de cette zone de deux évidements longitudinaux (34, 35) coopérant avec les rails de guidage (25) des structures porteuses des véhicules dits VTL ;
. un espace technique central en retrait (36) de largeur et de profondeur suffisantes pour permettre le passage de la base-châssis (11) le long de la structure porteuse du véhicule de transport logistique malgré la présence d'éléments ou d'organes en saillie dans cette zone médiane du châssis porteur ;
. des plans longitudinaux porteurs (37, 38) bordant chacun la partie centrale, aptes à venir en contact avec les rouleaux (29) du train de rouleaux d'une piste de convoyage (28) telle que celle équipant les plans de chargement des avions-cargos (31).

11. Abri-conteneur selon la revendication 1, caractérisé en ce que les structures d'appui et de guidage sont destinées à coopérer avec le plan ou le chemin porteur d'un véhicule (24).

12. Abri-conteneur selon la revendication 1, caractérisé en ce que les structures d'appui et de guidage sont destinées à coopérer avec le plan ou le chemin porteur d'un aéronef transporteur (31).

## Patentansprüche

1. Bewohnbarer Raumcontainer mit veränderbarem Innenraum mit Längsseiten (5, 6) und Querseiten (3, 4), der aus vier Eckständern (7) als Skelett und diese umhüllenden Wandpaneelen gebildet ist, wobei die Eckständer miteinander endständig über Horizontalelemente (10) verbunden sind, die einen Innenraum und Öffnungsmaße der Längsseiten festlegen, und mit Einrichtungen zur Vergrößerung des Innenraums durch Ausfahren verstellbarer Wandpaneele (39-42) und mit versenkbaren Hubstützen (51), dadurch gekennzeichnet, daß die Stützen (51) in den Eckständern (7) untergebracht sind und diese durch eine einfache Quer-/Translationsbewegung verlassen können, um den gesamten Raumcontainer unter Beibehaltung einer ausreichenden Stützweite zum Passieren und Beladen eines Trägerfahrzeugs unter Nutzung nur der Stützen (51) anzuheben, und daß sein unterer Bereich ein Basis-Chassis (11) ist, dessen Unterseite Auflage- und Führungsstrukturen aufweist, die mit einer Transportebene oder -bahn eines Fahrzeugs (24) und eines Transportflugzeugs (31) zusammenwirken, und daß der Container an einer seiner Querseiten (3, 4) in einer Aufnahme (19) in der Wand der einen oder anderen Querseite (3, 4) untergebrachte Greifmittel (18) aufweist, mit denen Handhabungsmittel (22, 23) sogenannter logistischer Transportfahrzeuge (24) in Eingriff gelangen.

2. Raumcontainer nach Anspruch 1, dadurch gekennzeichnet, daß die Greifmittel (18) in Form eines Greifrings ausgebildet sind.

3. Raumcontainer nach Anspruch 1, dadurch gekennzeichnet, daß die Stützen (51) mittels einer Gelenkeinheit (56) in Form einer Hubschere (57) seitlich aus den Eckständern (7) des Containers ausfahrbar sind.

4. Raumcontainer nach Anspruch 1 und 3, dadurch gekennzeichnet, daß die Eckständer (7) des Containers in Form von Kassetten (50) ausgebildet sind, in denen die Hubstützen (51) untergebracht sind.

5. Raumcontainer nach einem der vorangehenden Ansprüche, dadurch gekennzeichnet, daß die Stützen (51) als einstückiger Rohrkörper ausgeführt sind, der eine Tragstange (54) einer Schraubspindel aufnimmt, die sich auf dem Boden mittels einer Fußplatte (55) abstützt, wobei die gesamte Einheit über den Gelenkanschluß der Hubschere (56, 57) mit dem Eckständer (7) verbunden ist, die zwei obere in Länglöchern (63, 64) bewegliche Gelenke (61, 62) aufweist.

6. Raumcontainer nach einem der Ansprüche 1 bis 5, dadurch gekennzeichnet, daß die Hubstützen (51) aus zwei unabhängigen Rohrstücken (65, 66) gebildet sind, die entlang eines einzigen vertikalen Trägers an der Tragstange (54) gleiten und mit dem Eckständer über einen Gelenkanschluß der Hubschere (56, 57) verbunden sind, dessen eines oberes Gelenk in einem Langloch (67) beweglich ist.

7. Raumcontainer nach dem vorangehenden Anspruch, dadurch gekennzeichnet, daß das Festsetzen durch einen in das Langloch (67) einsetzbaren Keil (68) erfolgt.

8. Raumcontainer nach Anspruch 1, dadurch gekennzeichnet, daß die Längsseiten (5, 6) durch Ausfahren veränderbar und durch Längs- (41, 42) und Seitenpaneele (39, 40) gebildet sind, wobei die Längspaneele (41, 42) direkt an den Längsträgern (10) des Skeletts schwenkbar gelagert sind, um nach dem Ausfahren ein Vordach auszubilden.

9. Raumcontainer nach dem vorhergehenden Anspruch, dadurch gekennzeichnet, daß die Seitenpaneele (39, 40) direkt an den Eckständer (7) schwenkbar oder an den Längspaneelen (41, 42) klappbar und angelenkt sind.

10. Raumcontainer nach Anspruch 1, dadurch gekennzeichnet, daß die Unterseite des Unterbaus des Basis-Chassis' (11) aufweist:
- Längsborde gegenüber einer Mittellängszone;
- zwei geradlinige, ebene Längsbereiche (32, 33), die beiderseits dieser Zone von zwei Längsaussparungen (34, 35) gefolgt sind, welche mit den Führungsschienen (25) von Tragstrukturen von Logistikfahrzeugen zusammenwirken;
- einen zentralen, zurückspringenden, technischen Zwischenraum (36) geeigneter Breite und Tiefe, um das Basis-Chassis (11) entlang der Tragstruktur des Logistikfahrzeugs trotz vorspringender Elemente oder Organe in dieser mittleren Zone des Trägerchassis passieren zu lassen;
- den Zentralbereich beiderseits begrenzende Längstragflächen (37, 38), die in Kontakt mit den Rollen (29) des Rollenganges einer Förderbahn (28), wie sie an Ladeflächen von Transportflugzeugen (31) vorgesehen sind, bringbar sind.

11. Raumcontainer nach Anspruch 1, dadurch gekennzeichnet, daß die Lager- und Führungsstrukturen mit der Tragebene oder -bahn eines Fahrzeugs (24) zusammenwirken.

12. Raumcontainer nach Anspruch 1, dadurch gekennzeichnet, daß die Lager- und Führungsstrukturen mit der Tragebene oder der -bahn eines Transportflugzeuges (31) zusammenwirken.

## Claims

1. Walk-in shelter-container with an expandable inner volume, and which has longitudinal facades (5,6) and transverse facades (3,4) consisting of panels which clad a frame consisting of four angle uprights (7) which are connected at the end by horizontal components (10) delimiting an inner volume and opening dimensions of the longitudinal facades, comprising means which permit enlargement of the inner volume by use of extendable facade panels (39-42) and withdrawable support and lifting props (51), characterised in that the props (51) are accommodated in the angle uprights (7) and can be extracted from the latter by means of a simple transverse translation movement in order to permit lifting of the shelter whilst retaining a width between supports which is sufficient for the passage of a carrier vehicle (24) for the purpose of loading the container solely by use of the props (51), and in that its lower part is a chassis base (11), of which the under-surface is shaped in accordance with support and guiding structures which are intended to cooperate with a support plane or support path of a vehicle (24) and a transport aircraft (31), and in that the container comprises on one of its transverse surfaces (3,4) grasping means (18) which are contained in a recess (19) in the wall of one or the other of its transverse surfaces (3,4), on which there are engaged handling means (22,23) of so-called logistic transport vehicles (24).

2. Shelter-container according to claim 1, characterised in that the grasping means (18) are in the form of a grasping ring.

3. Shelter-container according to claim 1, characterised in that the props (51) are conveyed laterally outside the angle uprights (7) of the container by an articulated assembly (56) consisting of cross-pieces (57) which are connected to one another in a pivoting manner.

4. Shelter-container according to claims 1 and 3, characterised in that the angle uprights (7) of the container are in the form of boxes (50) in which the support and lifting props (51) are accommodated.

5. Shelter-container according to one of the preceding claims, characterised in that the props (51) are of the single-piece tubular body type (53) containing a support rod (54) for a screw jack which is supported on the ground by a bearing plate (55), the assembly being connected to the angle upright (7) by the articulated cross-piece connection (56, 57) which has two upper articulations (61,62) which are displaceable in apertures (63,64).

6. Shelter-container according to one of claims 1 to 5, characterised in that the props (51) consist of two independent tubular sections (65,66) which slide along a single vertical support on the support rod (54) and are connected to the upright by a pivoting cross-piece articulated connection (56,57), of which one of the upper articulations is displaceable in an aperture (67).

7. Shelter-container according to the preceding claim, characterised in that immobilisation is obtained from a wedging part (68) which is inserted in the aperture (67).

8. Shelter-container according to claim 1, characterised in that the longitudinal facades (5,6) are expandable by deployment, and consist of longitudinal panels (41,42) and lateral panels (39,40), the longitudinal panels (41,42) being articulated in a pivoting manner (39-42) directly around the body of the side members (10) of the framework, and are intended to form a screen after deployment.

9. Shelter-container according to the preceding claim, characterised in that the lateral panels (39,40) are articulated directly around the body of the angle uprights (7), or are folded and articulated on the longitudinal facade panels (41,42).

10. Shelter-container according to claim 1, characterised in that the under-surface of the lower structure of the chassis base (11) is shaped in accordance with:
. longitudinal edges towards a median longitudinal area;
. two straight longitudinal flat edges (32,33) which are followed on both sides of this area by two longitudinal indentations (34,35) which cooperate with the guide rails (25) of the support structures of vehicles known as VTL;
. a central, recessed technical space (36) which has a width and depth sufficient to permit passage of the chassis base (11) along the support structure of the logistic transport vehicle, despite the presence of components or units which project in this median area of the support frame;
. longitudinal support frames (37,38) each bordering the central part, which can come into contact with the rollers (29) of the set of rollers of a conveyor track (28) such as that which equips the loading planes of cargo aircraft (31).

11. Shelter-container according to claim 1, characterised in that the support and guiding structures are intended to cooperate with the support plane or path of a vehicle (24).

12. Shelter-container according to claim 1, characterised in that the support and guiding structures are intended to cooperate with the support plane or path of a transport aircraft (31).
